# EUROPÄISCHE PATENTSCHRIFT

(11) **EP 1 359 376 B1**
(45) Veröffentlichungstag und Bekanntmachung des Hinweises auf die Patenterteilung: **16.06.2010**
(21) Anmeldenummer: 03009434.6
(22) Anmeldetag: 25.04.2003
(51) Int. Cl.: F23R 3/30, F23R 3/34

(54) **Gasturbinenbrennkammer mit gezielter Kraftstoffeinbringung zur Verbesserung der Homogenität des Kraftstoff-Luft-Gemisches**
Combustion chamber for gas turbine with precise fuel injection to increase the homogeneity of the air-fuel mixture
Chambre de combustion pour turbine à gaz avec injection précise de carburant pour améliorer l'homogenéité du mélange air-carburant

(30) Priorität: 30.04.2002 DE 10219354
(43) Veröffentlichungstag der Anmeldung: 05.11.2003
(73) Patentinhaber: Rolls-Royce Deutschland Ltd & Co KG, 15827 Dahlewitz (DE)
(72) Erfinder: Dörr, Thomas, Dr.-Ing., 12167 Berlin (DE); Lazik, Waldemar, Dipl.-Ing., 14513 Teltow (DE)
(74) Vertreter: Schaeberle, Steffen

(56) Entgegenhaltungen:
- EP-A- 0 870 989
- EP-A- 1 172 610
- GB-A- 2 012 415
- US-A- 3 699 773
- US-A- 4 845 952
- US-A- 5 251 447
- US-A- 5 778 676
- US-A- 5 927 076
- US-A- 6 094 916

## Beschreibung

Die Erfindung bezieht sich auf eine Gasturbinenbrennkammer mit einem Brenner und mit Mitteln zur Kraftstoffzufuhr sowie mit einem Zerstäuber.

Aus dem Stand der Technik sind unterschiedlichste Ausgestaltungen von Gasturbinenbrennkammern vorbekannt.

Zur Reduzierung des Schadstoffausstoßes, vornehmlich der Stickoxidemissionen, muss generell der Kraftstoff mit möglichst viel Luft vorgemischt werden, um einen mageren, durch Luftüberschuss gekennzeichneten Verbrennungszustand einzustellen.

Bei Fluggasturbinen ist es zusätzlich erforderlich, einen hohen Gesamtwirkungsgrad sowie reduzierte Stickoxidemissionen zu erzielen. Dieser bedingt einen hohen Energieumsatz und damit große Kraftstoffmassenströme innerhalb der Brennkammer.

Bei den bekannten Brennkammern erfolgt die Stabilisierung der Verbrennung fast ausschließlich mittels Luftdrall, welcher eine Rezirkulation von teilverbrannten Gasen ermöglicht.

Bei den bekannten Ausgestaltungsformen wird der Kraftstoff meist zentral durch eine Düse eingebracht, die auf der Mittelachse eines Zerstäubers angeordnet ist. Der Kraftstoff wird hierbei oftmals mit erheblichem Überdruck in die Luftströmung eingespritzt, um genügend Durchdringung zu erzielen und möglichst viel Luft mit Kraftstoff vormischen zu können.

Derartige Druckzerstäuber haben zum einen die Aufgabe, Kraftstoff direkt zu zerstäuben. Bei manchen Bauformen von Einspritzdüsen soll der Kraftstoff möglichst vollständig auf eine Zerstäuberlippe aufgesprüht werden. Der Kraftstoff wird durch die Luftströmung auf der Zerstäuberlippe beschleunigt und am stromabwärtigen Ende der Zerstäuberlippe in kleine Tropfen zerstäubt oder zerrissen und mit der Luftströmung gemischt.

Eine andere, aus dem Stand der Technik bekannte Möglichkeit besteht darin, den Kraftstoff auf die Zerstäuberlippe mit einem sogenannten "Filmleger" aufzubringen, wobei der Kraftstoff möglichst gleichförmig in einem Film verteilt wird.

Die EP 0 935 095 A2 zeigt eine Gasturbinenbrennkammer mit einer ringförmigen Kraftstoffzuführleitung, aus der Kraftstoff in einen Luftstrom entweder am äußeren Umfang des Luftstroms oder in einen weiter innenliegenderen Bereich zugeführt werden kann.

Beim Stand der Technik erweist es sich als nachteilig, dass sowohl die Kraftstoffeinspritzung mit zentraler Düse bzw. Druckzerstäuber als auch eine Ausbringung als Film auf einen Filmleger nicht oder nur teilweise zu einer homogenen Mischung des Kraftstoffs mit der zur Verbrennung durchströmenden Luft führt. Moderne Brennkammern, die auf eine Reduzierung der Stickoxidemissionen hin optimiert werden, zeichnen sich dadurch aus, dass große Anteile an Luft mit Kraftstoff in engen stöchiometrischen Bereichen gemischt werden müssen, bevor sie der Verbrennung zugeführt werden. Daher muss ein großer Anteil der in die Brennkammer eintretenden Luft durch die Kraftstoffdüse strömen und hier mit dem Kraftstoff vorgemischt werden, bevor die Verbrennung in der Brennkammer stattfindet. Dieser Luftanteil kann bis zu 70% der gesamten Brennkammerluft betragen. Da dieser Luftanteil aus besagten Gründen sehr groß ist, sind dementsprechend große Luftströmungsquerschnitte innerhalb des Kraftstoffaufbereitungssystems bzw der Kraftstoffdüse notwendig. Weiterhin erweist es sich als nachteilig, dass die durch derartige Düsen austretenden Kraftstoffstrahlen und Kraftstoffsprays die bei Brennkammern immer größer werdenden Luftkanäle nicht ausreichend durchdringen können und somit eine homogene Verteilung des. Kraftstoff-Luft-Gemisches nicht oder nur bedingt erreichbar ist.

Die US-A1-4,845,952 zeigt eine Einspritzdüse für gasförmigen Kraftstoff. Der Zweck liegt darin, einen Flammenrückschlag ("Flash-back") zu vermeiden. Der Aufbau sieht multiple "Minizerstäuber" in einem Feld vor, welches dann in einer Rohrbrennkammer zur Vermischung eingesetzt wird. Die Gesamtbrennkammer besteht dann aus mehreren identischen "combustors", also Rohrbrennkammern. Der Kraftstoff aus den beschriebenen Einspritzsystemen wird zusätzlich zu dem bereits in der Luft vorhandenen gasförmigen Kraftstoff eingebracht. Die Verbrennungsluft wird nicht verdrallt zur Flammenstabilisierung. Es wird von einer Venturiströmung gesprochen.

Die US-A1-5,251,447 sieht eine Einspritzung des Kraftstoffs aus den Schaufeln (Nachlaufausspritzung), aber auch von der äußeren Berandung vor. Diese Düse hat ferner auch keine Pilotierung. Die Ausspritzung geschieht noch vor der Beschleunigung der Strömung und somit nicht an den Stellen höchster Geschwindigkeit. Die Ausspritzung erfolgt nicht am engsten Düsenquerschnitt.

Der Erfindung liegt die Aufgabe zu Grunde, eine Gasturbinenbrennkammer der eingangs genannten Art zu schaffen, welche bei einfachem Aufbau, kostengünstiger Herstellbarkeit und sicherer Betriebsweise eine zuverlässige homogene Kraftstoff-Luft-Mischung ermöglicht.

Erfindungsgemäß wird die Aufgabe durch die Merkmale der unabhängigen Ansprüche gelöst, die Unteransprüche zeigen weitere vorteilhafte Ausgestaltungen der Erfindung.

Erfindungsgemäß ist somit vorgesehen, dass die Mittel zur Kraftstoffzufuhr zur Einspritzung des Kraftstoffs in Bereiche mit den größten Luftströmungsquerschnitten ausgebildet sind.

Die erfindungsgemäße Ausgestaltung zeichnet sich durch eine Reihe erheblicher Vorteile aus.

Erfindungsgemäß wird der Kraftstoff zunächst gezielt in den Strömungsbereichen der Luft ausgebracht, in denen die größten Luftströmungsgeschwindigkeiten bzw. die höchsten lokalen Luftmassenströme vorliegen. Erfindungsgemäß wird somit vermieden, dass die Kraftstoffstrahlen bzw. Kraftstoffsprays über weite Strecken, wie beim Stand der Technik, innerhalb des Zerstäubers in problembehafteter Weise die Luftströmung durchdringen müssen. Der Kraftstoff wird hierbei in den Luftkanal des Zerstäubers ausgebracht, der den höchsten Anteil der gesamten den Zerstäuber durchströmenden Luft führt.

Die erfindungsgemäße Gasturbinenbrennkammer führt somit zu einer sehr gleichmäßigen Verteilung des Kraftstoffes in der durchströmenden Luft und zur Bildung eines homogenen Kraftstoff-Luft-Gemisches.

Durch die charakteristische Drallströmung innerhalb der Brennkammer sind die Bereiche hoher lokaler Luftmassenströme sehr oft sehr dicht an den radial äußeren, von der Mittelachse abgewandten Berandungen der Luftströmungskanäle der Einspritzdüse vorzufinden.

Erfindungsgemäß ist vorgesehen, den Kraftstoff von der radial äußeren Berandung des Luftströmungskanals zuzuführen. Dies kann durch in die Luftströmung ragende Röhrchen oder durch Kraftstoffstrahlen, die aus Öffnungen in der äußeren Berandung austreten, erfolgen.

Die Kraftstoffeinspritzung kann demnach dezentral in der Nähe der Orte mit größten Luftströmungsgeschwindigkeiten erfolgen. Im Gegensatz zu einem Filmleger wird ebenfalls kein Kraftstofffilm aufgebracht, der im Nachlauf einer Zerstäuberlippe zerfällt. Vielmehr wird der Kraftstoff möglichst weit stromaufwärts mit einzelnen, diskreten Strahlen oder Sprays in die Bereiche der Luftströmung eingebracht, die einen hohen lokalen Massenstromanteil darstellen.

Erfindungsgemäß ist es möglich, den Aufbau der einzelnen Strahlen sowie deren Lochmuster (Anzahl, Lochreihen etc.) in bevorzugter Weise an die benötigte Eindringtiefe des Kraftstoffs in die Luftströmung sowie an die geforderte Umfangshomogenität und/oder den Lastpunkt, für welchen der Zerstäuber optimiert werden soll, anzupassen.

Erfindungsgemäß ist es auch möglich, einzelne Kraftstoffstrahlen mit einzelnen Kraftstoffsprays zu ersetzen.

Erfindungsgemäß sind die einzelnen Austrittsöffnungen (Kraftstoffdüsen) der dezentralen Kraftstoffeinspritzung mit einer zentralen Kraftstoffeinspritzung kombiniert. Hierbei wird eine zentrale, pilotierte Düse verwendet. Die Kraftstoffaufteilung zwischen der pilotierten Flamme und der dezentralen Einspritzung kann entweder fest oder lastabhängig gewählt werden.

Erfindungsgemäß ist es möglich, die Kraftstoffzufuhr entweder getrennt oder innerhalb eines gemeinsamen Tragarmes vorzusehen.

Erfindungsgemäß ist es somit auch möglich, den Kraftstoff sowohl in den inneren als auch in den äußeren Strömungskanal einzubringen. Hierzu können unterschiedliche Lochfelder oder Lochgrößen der Öffnungen der Kraftstoffkanäle vorgesehen sein, welche düsenartig wirken. Sie können einreihig oder mehrreihig ausgebildet sein und in unterschiedlichen Lochmustern angeordnet sein. Hierdurch ist es insgesamt möglich, in unterschiedliche Bereiche der Luftströmung und in unterschiedliche Schichten der Luftströmung die gewünschten Kraftstoffmengen einzubringen.

Es soll auch darauf hingewiesen werden, dass die Erfindung sich auf mehrflutige Einspritzdüsen bezieht, diese sind bevorzugter Weise mindestens zweiflutig, sie können aber auch dreiflutig oder vierflutig ausgebildet sein.

In einer alternativen Ausgestaltung der Erfindung ist es besonders günstig, wenn die Mittel zur Kraftstoffzufuhr einzelne, in den freien Querschnitt des Zerstäubers ragende Zuführröhren umfassen. Mittels derartiger Zuführröhren ist es möglich, den Kraftstoff ganz gezielt an den beschriebenen Bereichen der Luftströmung austreten zu lassen.

Dies geschieht durch gezielte "Impfung" der Luft mit Kraftstoff in Bereichen höchster Luftströmungsgeschwindigkeiten. Der Kraftstoff wird hierbei mit möglichst wenig Impuls in die Strömung eingebracht. Im Gegensatz zu dem aus dem Stand der Technik bekannten Filmleger wird erfindungsgemäß somit kein Kraftstofffilm auf die Zerstäuberlippe aufgebracht. Vielmehr wird der Kraftstoff erfindungsgemäß weit stromaufwärts an diskreten Stellen in Bereichen der Luftströmung platziert, welche den höchsten lokalen Massenstromanteil darstellen.

Besonders günstig kann es sein, wenn die Zuführröhren (Speichen) aerodynamisch gestaltet bzw. profiliert sind. Das Strömungsverhalten der Luftströmung wird hierdurch wenig beeinträchtigt.

Es ist erfindungsgemäß möglich, die Anzahl der Zuführröhren den jeweiligen Anforderungen anzupassen, abhängig von der zu erzielenden Homogenität des Kraftstoffs in Umfangsrichtung der Luftströmung.

Die Zuführröhren können in bevorzugter Weiterbildung der Erfindung auch mit einer Vorrichtung zur aktiven Kühlung versehen sein, beispielsweise durch einen weiteren Kraftstoffkreislauf. Auch kann es in günstiger Weiterbildung möglich sein, eine Spülung der Speichen zu deren Kraftstoffentleerung durch Luft vorzusehen, um bei einer möglichen Abschaltung der Kraftstoffzuführung eine thermische Zersetzung des Kraftstoffs zu verhindern.

Die Zuführröhren können sowohl rein radial als auch rein axial in ihrer Lage zur Düsenachse angeordnet sein, es sind auch beliebige Mischformen möglich.

Die Erfindung ist nicht darauf beschränkt, Zuführröhren oder Ähnliches in den Luft-Strömungsquerschnitt einzubringen bzw. dort zu positionieren. Vielmehr ist das erfindungsgemäße Verfahren auch durch Kraftstoff-Düsen realisierbar, die im Randbereich des Luft-Strömungsquerschnitts angeordnet sind und es ermöglichen, den Kraftstoff durch Kraftstoffstrahlen oder Kraftstoffsprays in die Luftströmung einzuspritzen. Bei dieser konstruktiven Variante erfolgt die Einbringung des Kraftstoffs somit durch die geeignete Anordnung und Dimensionierung der Düsen sowie durch eine Aufbringung eines geeigneten Kraftstoffdrucks. Somit münden in der radial äußeren Berandung des Luftströmungskanals entsprechende Zuführöffnungen (Düsen), die den Kraftstoff mittels Strahlen oder Sprays in die Luftströmung einbringen. Es versteht sich somit, dass die einzelnen Austrittsöffnungen oder Kraftstoffdüsen einreihig, mehrreihig oder in verschiedenen Lochmustern angeordnet sein können. Sie können auch unterschiedliche Durchmesser aufweisen, um auf diese Weise Kraftstoffstrahlen oder Kraftstoffsprays unterschiedlicher Intensität und unterschiedlicher Eindringtiefe in die Luftströmung auszubilden.

Bei der erfindungsgemäßen Ausgestaltung (auch der nachfolgenden Ausführungsbeispiele) ist der Aufbau der Düse der Brennkammer nicht auf zwei Luftströme (zweiflutig) beschränkt, welche durch eine Lippe voneinander getrennt werden. Es sind vielmehr auch andere Ausgestaltungsformen in erfindungsgemäßer Weise möglich.

Im Folgenden wird die Erfindung anhand von Ausführungsbeispielen in Verbindung mit der Zeichnung beschrieben. Dabei zeigt:
- Fig. 1: eine schematische Schnittansicht einer erfindungsgemäßen Gasturbinenbrennkammer,
- Fig. 2: eine schematische Darstellung der Luftverteilung einer schadstoffarmen Gasturbinenbrennkammer,
- Fig. 3: eine Seiten-Schnittansicht eines ersten Ausführungsbeispiels einer erfindungsgemäßen Kraftstoffdüse mit dezentraler Einspritzung (sowie vergrößerter Detaildarstellung hierzu),
- Fig. 4: eine Seiten-Schnittansicht, analog Fig. 3, eines weiteren Ausführungsbeispiels einer Kraftstoffdüse mit Einspritzung des Kraftstoffs in den inneren (Primärluftkanal)und den äußeren Strömungskanal (Sekundärluftkanal),
- Fig. 5: eine Seiten-Schnittansicht eines weiteren Ausführungsbeispiels einer Kraftstoffdüse bei Kombination mit zentraler und dezentraler Einspritzung mit separater Kraftstoffzufuhr,
- Fig. 6: eine Schnittansicht, ähnlich Fig. 3 oder 4, eines weiteren Ausführungsbeispiels einer Kraftstoffdüse mit Kombination einer zentralen und dezentralen Einspritzung mit gemeinsamer Kraftstoffzufuhr,
- Fig. 7: eine Seiten-Schnittansicht eines weiteren Ausführungsbeispiels einer Kraftstoffdüse, ähnlich Fig. 5, bei Kombination mit zentraler und dezentraler Einspritzung mit separater Kraftstoffzufuhr und separater Luftführung,
- Fig. 8: eine Seiten-Schnittansicht, analog Fig. 3, eines weiteren Ausführungsbeispiels das nicht Teil der Erfindung ist.
- Fig. 9: eine schematische Seiten-Schnittansicht einer Kraftstoffdüse ähnlich Fig. 3 mit Darstellung der Geschwindigkeitsverteilung der Luftströmung am Düsenaustritt sowie der Kraftstoffströmung.

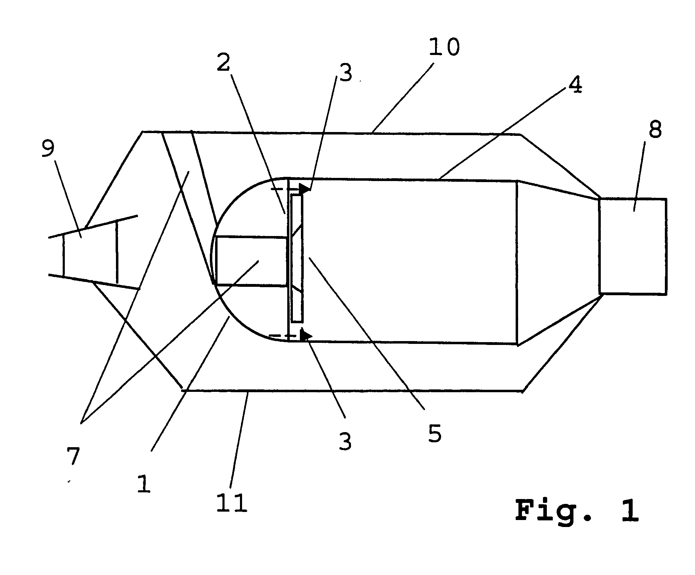

Die Fig. 1 zeigt in schematischer Seitenansicht einen Schnitt durch eine erfindungsgemäße Gasturbinenbrennkammer. Dieser umfasst eine Abdeckung 1 eines Brennkammerkopfes sowie eine Grundplatte 2. Weiterhin ist eine Brennkammerwand 4 dargestellt, die in eine schematisch dargestellte Turbinenleitschaufel 8 mündet. Die Fig. 1 zeigt weiterhin ein Brennkammeraußengehäuse 10 sowie ein Brennkammerinnengehäuse 11. Im Einströmbereich ist eine Leitschaufel 9 im Verdichterauslass dargestellt. Das Bezugszeichen 7 zeigt einen Brenner mit Brennerarm und Drallerzeugung. Weiter umfasst die Gasturbinenbrennkammer ein Hitzeschild 5 mit einem Loch für den Brenner 7 sowie einzelne, im Einzelnen nicht gezeigte Öffnungen zur Ausbildung eines Starterfilms 3.

Auf die Darstellung weiterer Details der Gasturbinenbrennkammer kann an dieser Stelle verzichtet werden, da diese aus dem Stand der Technik bekannt sind. Insofern ist auf diesen zu verweisen.

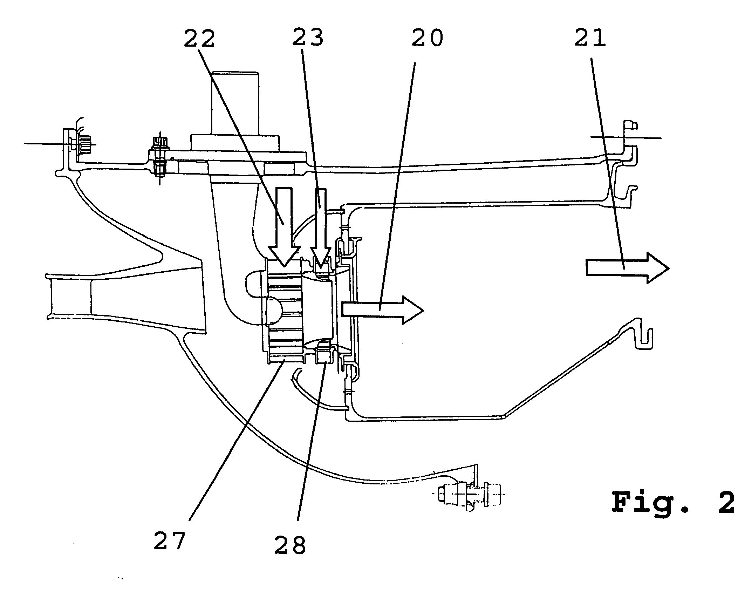

Die Fig. 2 zeigt in schematischer Darstellung die Verteilung der durch die Gasturbinenbrennkammer strömenden Luft. Ein Großteil des Luftmassenstroms tritt hierbei durch die Kraftstoffdüse als Düsenluftmassenstrom 20 in die Brennkammer ein. Dieser Düsenluftmassenstrom 20 wird mit Brennstoff gemischt bevor das Gemisch in die Brennkammer der Verbrennung zugeführt wird und die Brennkammer als Austrittsmassenstrom 21 verlässt. Der Anteil des Düsenluftmassenstroms 20 im Verhältnis zum Austrittsmassenstrom 21 muss bei schadstoffarmen Brennkammern für reduzierte Stickoxidemissionen bis zu 75% betragen. Der Düsenmassenstrom 20 teilt sich im Falle eines zweiflutigen Aufbaus der Kraftstoffdüse in einen Primärluftkanal 22 und einen Sekundärluftkanal 23. Der Primärstrom oder Primärluftkanal 22 wird mit Kraftstoff vorgemischt bevor dieser mit dem Sekundärstrom oder Sekundärluftkanal 23 gemischt wird und in die Brennkammer eintritt. Der Primärstrom 22 trägt hierbei mit einem Luftanteil von mehr als 40% im Verhältnis zum Düsenluftmassenstrom 20 einen Großteil des durch die Düse in die Brennkammer eintretenden Düsenluftmassenstroms 20.

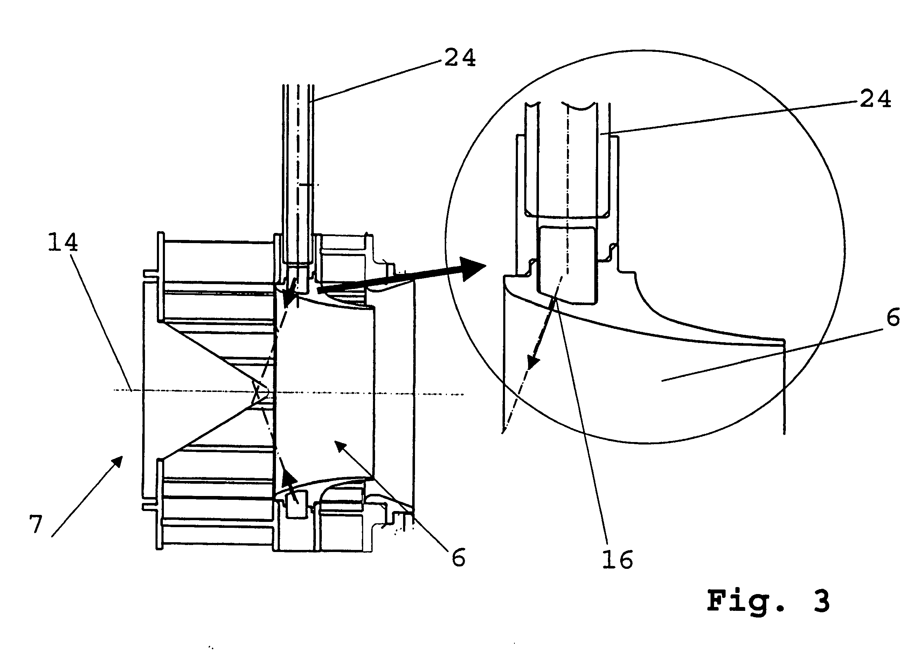

Das Ausführungsbeispiel der Fig. 3 zeigt ein erstes Ausführungsbeispiel, bei welchem die Zuführröhren 24 für den Kraftstoff von außen in den Zerstäuber 6 bzw. in einen nicht näher bezeichneten Ringkanal münden. Die kleinen Pfeile zeigen jeweils die Austrittsrichtung der Kraftstoffstrahlen durch die Austrittsöffnungen 16. Hierbei ergibt sich auch die wahlweise mögliche winkelmäßige Anstellung der Mittellinien der Austrittsöffnungen 16 für den Kraftstoff.

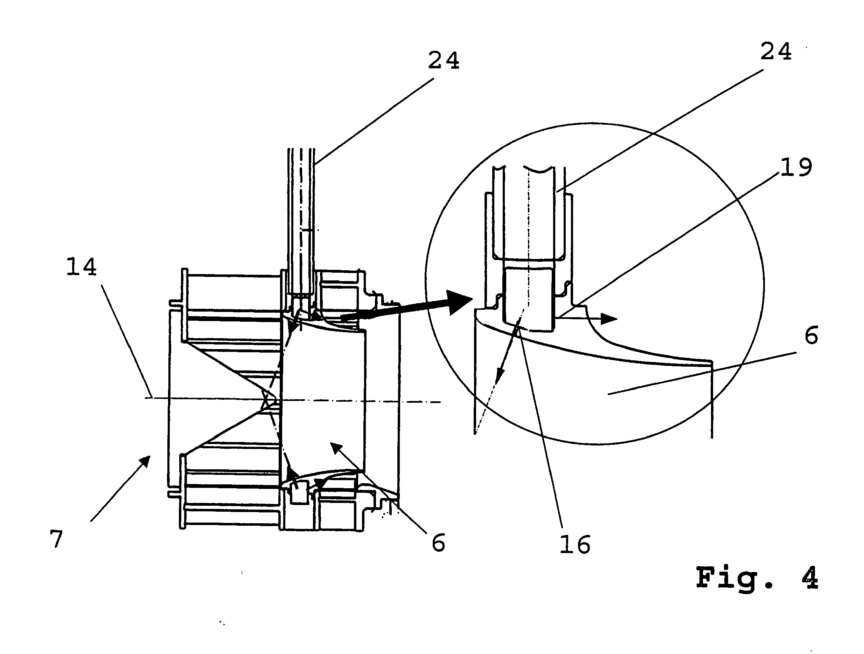

Die Fig. 4 zeigt ein Ausführungsbeispiel, ähnlich der Darstellung der Fig. 3, wobei ebenfalls ein vergrößerter Bereich in dem Kreisausschnitt gezeigt ist. Es ist ersichtlich, dass die Kraftstoff-Zuführröhre 24 in eine Austrittsöffnung 16 mündet, von der aus Kraftstoff mit einer Ausrichtung partiell gegen die Strömungsrichtung in den Luftmassenstrom eingespritzt wird. Hierdurch wird Kraftstoff in den inneren Luftströmungskanal eingebracht.

Von der Kraftstoff-Zuführröhre 24 zweigt eine weitere Austrittsöffnung 19 ab, durch welche Kraftstoff in den äußeren Luftströmungskanal eingespritzt wird. Die beiden Einspritzrichtungen des Kraftstoffs sind jeweils durch Pfeile markiert.

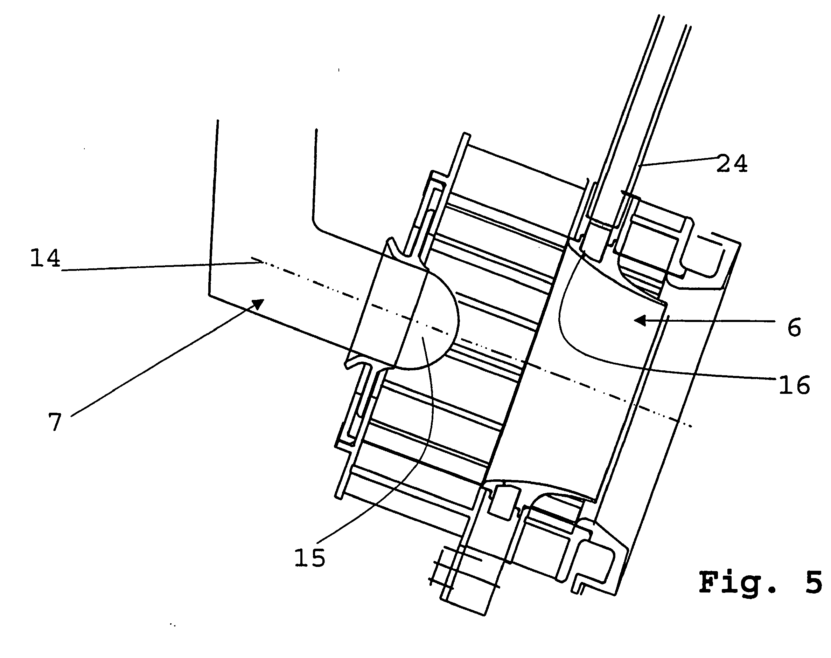

Die Fig. 5 zeigt ein weiteres Ausführungsbeispiel einer erfindungsgemäßen Kraftstoffdüse, bei welcher die dezentrale Kraftstoffeinspritzung durch die Austrittsöffnungen 16 mit einer zentralen Kraftstoffeinspritzung 15 kombiniert ist. Es erfolgt jeweils eines separate Kraftstoffzufuhr zu den Austrittsöffnungen 16 bzw. der zentralen Kraftstoffeinspritzung 15.

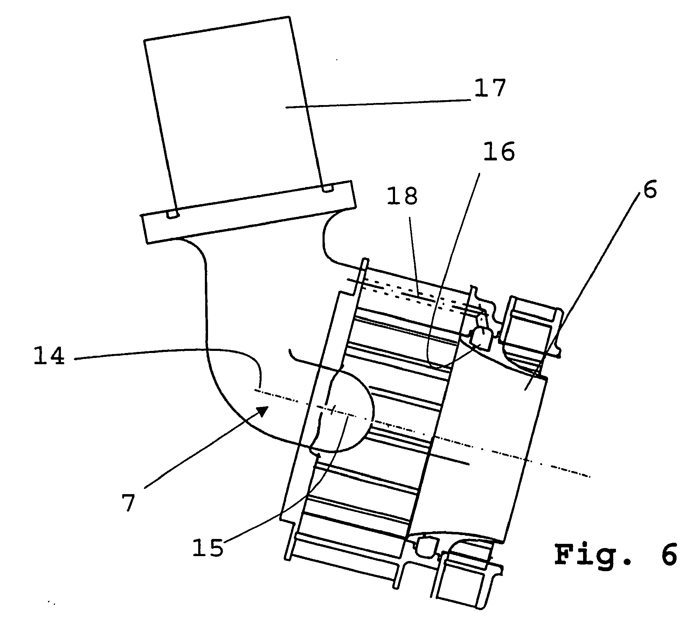

Ein weiteres Ausführungsbeispiel ist in Fig. 6 dargestellt. Auch hier erfolgt eine Kombination einer zentralen Kraftstoffeinspritzung 15 im Bereich der Düsenachse 14 mit einer dezentralen Kraftstoffeinspritzung durch Austrittsöffnungen 16 am Umfangsbereich, wobei jedoch schematisch die Kraftstoffzufuhren für die zentrale Kraftstoffeinspritzung 15 und für die dezentrale Kraftstoffeinspritzung durch Austrittsöffnungen 16 durch einen gemeinsamen Brennerarm 17 erfolgen.

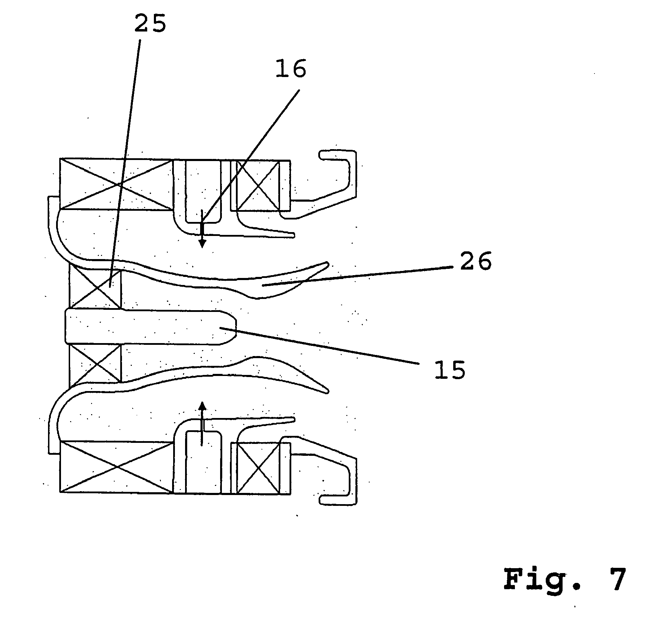

Die Fig. 7 zeigt ein weiteres Ausführungsbeispiel mit der Kombination einer zentralen Kraftstoffeinspritzung 15 im Bereich der Düsenachse mit einer dezentralen Kraftstoffeinspritzung durch Austrittsöffnungen 16 am Umfangsbereich, wobei jedoch die zentrale Kraftstoffeinspritzung 15 mit einem zusätzlichen Pilotierungsdrallkörper 25 und einer Pilotierungsdüse 26 von der dezentralen Kraftstoffeinspritzung durch Austrittsöffnungen 16 räumlich getrennt wird.

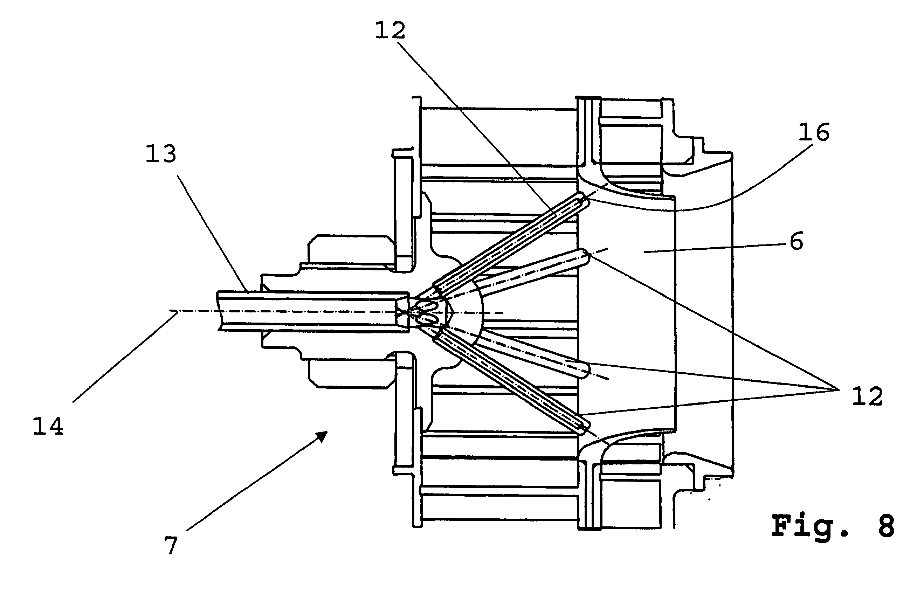

Die Fig. 8 zeigt ein abgewandeltes Ausführungsbeispiel, das nicht Teil der Erfindung ist. Ausgehend von einer zentralen Kraftstoffleitung 13 erstrecken sich speichenförmig nach außen gerichtete Zuführröhren 12. Die Anordnung ist symmetrisch zur Düsenachse 14 ausgestaltet. Wie sich aus der Schnittansicht der Zuführröhren 12 ergibt, weisen diese an ihren freien Ende jeweils eine Kraftstoffaustrittsöffnung auf, durch welche der Kraftstoff im Bereich der Außenwandung des Zerstäubers 6 ausbringbar ist.

Bei dem in Fig. 8 gezeigten Ausführungsbeispiel sind insgesamt sechs Zuführröhren 12 vorgesehen.

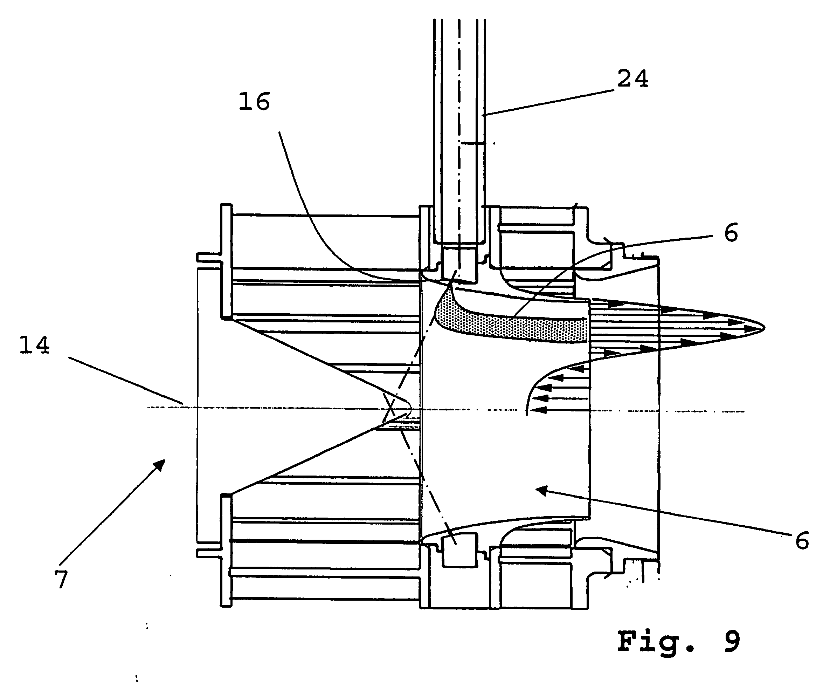

Die Fig. 9 zeigt zur Verdeutlichung die Geschwindigkeitsverteilung der Luftströmung am Düsenrand sowie den Verlauf des durch die Austrittsöffnung 16 eingespritzten Kraftstoffs. Es ist ersichtlich, dass der Kraftstoff in den Bereich der Luftströmung bzw. in den Luftströmungsquerschnitt eingebracht wird, an dem die größte Luftströmungsgeschwindigkeit vorliegt.

Wie vorstehend erläutert, ist es erfindungsgemäß sowohl vorgesehen, den Kraftstoff in Bereiche mit größten Luftströmungsgeschwindigkeiten als auch alternativ hierzu in Bereiche mit höchsten lokalen Luftmassenströmen auszubringen. Dies kann in Abhängigkeit von den jeweiligen Betriebsbedingungen, den Dichteverhältnissen oder ähnlichem optimiert werden. In Abhängigkeit von den Betriebsbedingungen ist es möglich, dass die Dichte der Luft gleich ist, so dass die größten Luftmassenströme auch die größten Luftströmungsgeschwindigkeiten haben. Durch die Möglichkeit, die Austrittslöcher des Kraftstoffs (Austrittsöffnungen) entsprechend einreihig oder mehrreihig anzuordnen, die Lochfelder oder Lochgrößen zu verändern sowie unterschiedliche Lochmuster vorzusehen, ist eine Anpassung an unterschiedlichste Betriebsbedingungen möglich. Es ist auch möglich, alternativ einzelne der Austrittsöffnungen aktiv zu verwenden, während andere, beispielsweise durch separate Kraftstoff-Zuführröhren, zeitweise abgeschaltet werden können.

Die vorstehende Beschreibung der Ausführungsbeispiele (Fig. 2-7) zeigt Ausgestaltungen, bei welchen Zuführröhren vorgesehen sind, die mit entsprechenden Austrittsöffnungen versehen sind. Es versteht sich, dass, wie bereits vorstehend erwähnt, auch geeignete Düsen vorgesehen sein können (beispielsweise die Austrittsöffnungen 16 bei dem Ausführungsbeispiel der Fig. 9), um Kraftstoffstrahlen oder Kraftstoffsprays in die freie Luftströmung einzubringen. Es ist nicht erforderlich, dass die Zuführröhren in den Luft-Strömungsquerschnitt hineinragen oder dort münden. Es ist vielmehr möglich, den Kraftstoff durch die Düsen, die in den Ausführungsbeispielen auch als Öffnungen 16 bezeichnet und dargestellt sind, auszubringen.

Die Erfindung wurde in der vorstehenden Erläuterung im Hinblick auf Vorrichtungs-Merkmale beschrieben. Es versteht sich, dass die Erfindung in gleichem Maße auch ein Verfahren zur Einbringung von Kraftstoff umfasst, wobei das Verfahren zur Einbringung in die Luftströmungsbereiche mit größten Geschwindigkeiten oder die Luftströmungsbereiche mit größten Massenströmen ausgerichtet sein kann. Eine Einschränkung auf die apparativen Merkmale gemäß oben stehender Beschreibung ergibt sich hierdurch nicht.

Ein erfindungsgemäßer Luft-Kraftstoffmischer ist somit dadurch charakterisiert, dass er mit einem Luftanteil von mehr als 40% der gesamten Brennkammerluft durchströmt wird und durch einen Strömungsteiler in einen Primärluftkanal und einen Sekundärluftkanal aufgeteilt wird, wobei der Primärluftkanal mit einem Luftanteil von mindestens 30% der gesamten Mischerluft durchströmt wird. Der Sekundärluftkanal umhüllt durch seine radial äußere Lage den Primärluftkanal. Der Strömungsteiler prägt zum einen der Primärströmung eine durch seine Kontur und durch das Verhältnis der Austrittsfläche des Drallkörpers zur Austrittsfläche des Strömungsteilers bestimmte Beschleunigung auf, zum anderen wird von dem Strömungsteiler aus in die Primärströmung der flüssige Kraftstoff aus Eintrittsöffnungen, die über den inneren Umfang des Strömungsteilers verteilt sind, eingebracht. Alternativ wird der Kraftstoff von einer zentralen Zufuhr über ein oder mehrere Zuführröhrchen in den Primärluftkanal im unmittelbaren Bereich des Strömungsteilers eingebracht.

In dem Mischer kann der Kraftstoff zusätzlich in den Sekundärluftkanal eingebracht werden.

Weiterhin wird die Luft des Primärluftkanals mittels radialer, axialer oder diagonaler (kombiniert radial und axial) Drallkörper verdrallt.

Die Luft des Sekundärluftkanals wird mittels radialer, axialer oder diagonaler (kombiniert radial und axial) Drallkörper verdrallt.

In dem beschriebenen Mischer wird der Kraftstoff homogen oder inhomogen am Umfang des Strömungsteilers ausgebracht, dabei können die Eintrittsöffnungen entweder als Einzelstrahl oder Einzelspray ausgebildet sein. Die Eintrittsöffnungen sind einreihig oder mehrreihig ausgeführt. Die Öffnungen über den Umfang können mit gleicher Größe oder ungleicher Größe und mit beliebiger Verteilung über den Umfang ausgeführt sein.

In dem beschriebenen Mischer kann der Kraftstoff auch über gleich oder unterschiedlich ausgeführte Zuführröhren eingebracht werden. Die Unterschiedlichkeit kann sich auf die Ausführung der Zuführröhrchen wie der Form, der Länge, der Ausrichtung, der Krümmung, die Ausführung der Austrittsöffnung wie Lochgröße oder Lochform und/ oder die Lage der Austrittsöffnung relativ zum Strömungsteiler beziehen.

Der Mischer kann betrieben werden in Kombination mit einem Pilotbrenner, der innerhalb des Primärluftkanals implementiert ist und der bei Teillastzuständen betrieben wird.

Der Mischer wird in Kombination mit einem Pilotbrenner und einem Pilotdrallkörper betrieben, der innerhalb des Primärluftkanals implementiert ist und durch einen Strömungsteiler von der Primärströmung abgeteilt ist. Der Pilotierungsluftstrom kann durch einen axialen, radialen oder diagonalen Drallkörper verdrallt werden.

Die Kraftstoffeindüsung erfolgt bevorzugt mit einer Vorrichtung zur aktiven Kühlung und/ oder mit einer Vorrichtung zur Spülung durch Luft zur Entleerung.

Die Erfindung ist nicht auf die gezeigten Ausführungsbeispiele beschränkt, vielmehr ergeben sich im Rahmen der Erfindung vielfältige Abwandlungs- und Modifikationsmöglichkeiten.

### Bezugszeichenliste

- 1: Abdeckung des Brennkopfes
- 2: Grundplatte
- 3: Starterfilm
- 4: Brennkammerwand
- 5: Hitzeschild mit Loch für Brenner 7
- 6: Zerstäuber
- 7: Brenner mit Brennerarm und Drallerzeuger
- 8: Turbinenleitschaufel
- 9: Leitschaufel im Verdichterauslass
- 10: Brennkammeraußengehäuse
- 11: Brennkammerinnengehäuse
- 12: Zuführröhre (Kraftstoffleitung)
- 13: zentrale Kraftstoffleitung
- 14: Düsenachse
- 15: zentrale Kraftstoffeinspritzung
- 16: Austrittsöffnung (Düse)
- 17: Brennerarm
- 18: Kraftstoffleitung
- 19: Austrittsöffnung
- 20: Düsenluftmassenstrom
- 21: Austrittsmassenstrom
- 22: Primärluftkanal
- 23: Sekundärluftkanal
- 24: Zuführröhre
- 25: Pilotierungsdrallkörper
- 26: Pilotierungsdüse
- 27: Primärkanaldrallkörper
- 28: Sekundärkanaldrallkörper

## Patentansprüche

1. Gasturbinenbrennkammer mit einem Brenner (7) und Mitteln zur Zufuhr von flüssigem Kraftstoff sowie einem Zerstäuber (6), wobei ein Primärluftkanal (22) des Brenners (7) der Brennkammer einen Großteil der für die Mischung und Verbrennung notwendigen Luft zuführt, und wobei die Mittel zur Kraftstoffzufuhr einzelne, in den freien Querschnitt des Primärluftkanals des Zerstäubers (6) ragende Zuführröhren (12) und/oder Austrittsöffnungen (16) umfassen, die von außen in den Bereich der Luftströmung münden, und die mit einer zentralen Kraftstoffeinspritzung (15) kombiniert sind, **dadurch gekennzeichnet, dass** die Mittel zur Kraftstoffzufuhr zur Einspritzung des Kraftstoffs in Bereiche mit größten Luftströmungsgeschwindigkeit ausgebildet sind.

2. Gasturbinenbrennkammer, mit einem Brenner (7) und Mitteln zur Zufuhr von flüssigem Kraftstoff sowie einem Zerstäuber (6), wobei ein Primärluftkanal (22) des Brenners (7) der Brennkammer einen Großteil der für die Mischung und Verbrennung notwendigen Luft zuführt, und wobei die Mittel zur Kraftstoffzufuhr einzelne, in den freien Querschnitt des Primärluftkanals des Zerstäubers (6) ragende Zuführröhren (12) und/ oder Austrittsöffnungen (16) umfassen, die von außen in den Bereich der Luftströmung münden, und die (16) mit einer zentralen Kraftstoffeinspritzung (15) kombiniert sind, **dadurch gekennzeichnet, dass** die Mittel zur Kraftstoffzufuhr zur Einspritzung des Kraftstoffs in Bereiche mit höchsten lokalen Luftmassenströmen ausgebildet sind.

3. Gasturbinenbrennkammer nach einem der Ansprüche 1 oder 2, **dadurch gekennzeichnet, dass** die Zuführröhren (12) und/oder die Austrittsöffnungen (16) einreihig angeordnet sind.

4. Gasturbinenbrennkammer nach einem der Ansprüche 1 bis 3, **dadurch gekennzeichnet, dass** die Zuführröhren (12) und/oder die Austrittsöffnungen (16) mehrreihig angeordnet sind.

5. Gasturbinenbrennkammer nach einem der Ansprüche 1 bis 4, **dadurch gekennzeichnet, dass** die Zuführröhren (12) und/oder die Austrittsöffnungen (16) mit unterschiedlichen Austrittsdurchmessern ausgebildet sind.

6. Gasturbinenbrennkammer nach einem der Ansprüche 1 bis 5, **dadurch gekennzeichnet, dass** die Zuführröhren (12) und/oder die Austrittsöffnungen (16) in unterschiedlichen Anordnungen angeordnet sind.

7. Gasturbinenbrennkammer nach einem der Ansprüche 1 bis 6, **dadurch gekennzeichnet, dass** die Zuführröhren (12) und/oder die Austrittsöffnungen (16) eine Vorrichtung zur aktiven Kühlung umfassen.

8. Gasturbinenbrennkammer nach einem der Ansprüche 1 bis 7, **dadurch gekennzeichnet, dass** die Zuführröhren (12) und/oder die Austrittsöffnungen (16) eine Vorrichtung zur Spülung durch Luft zur Entleerung aufweisen.

9. Gasturbinenbrennkammer nach einem der Ansprüche 1 bis 8, **dadurch gekennzeichnet, dass** die Zuführröhren (12) aerodynamisch gestaltet oder profiliert ausgebildet sind.

10. Gasturbinenbrennkammer nach einem der Ansprüche 1 bis 8, **dadurch gekennzeichnet, dass** die Zuführröhren (12) radial und/oder axial zur Düsenachse (14) verlaufen.

11. Gasturbinenbrennkammer nach einem der Ansprüche 1 bis 10, **dadurch gekennzeichnet, dass** zentrisch ein Pilotierungsdrallkörper (25) mit einer Pilotierungsdüse (26) zur zentrischen Kraftstoffeinspritzung angeordnet ist.

## Claims

1. Gas-turbine combustion chamber with a burner (7) and means for the supply of liquid fuel as well as an atomizer (6), with a primary air duct (22) of the burner (7) of the combustion chamber supplying a major part of the air required for mixture and combustion, and with the means for fuel supply including individual supply tubes (12) protruding into the free cross-section of the primary air duct of the atomizer (6) and/or exit ports (16) issuing from the outside into the air-flow area and being combined with a central fuel injector (15), **characterized in that** the means for fuel supply are provided for the injection of the fuel into areas with maximum air-flow velocity.

2. Gas-turbine combustion chamber with a burner (7) and means for the supply of liquid fuel as well as an atomizer (6), with a primary air duct (22) of the burner (7) of the combustion chamber supplying a major part of the air required for mixture and combustion, and with the means for fuel supply including individual supply tubes (12) protruding into the free cross-section of the primary air duct of the atomizer (6) and/or exit ports (16) issuing from the outside into the air-flow area and being combined with a central fuel injector (15), **characterized in that** the means for fuel supply are provided for the injection of the fuel into areas with maximum local air-mass flows.

3. Gas-turbine combustion chamber in accordance with one of the Claims 1 or 2, **characterized in that** the supply tubes (12) and/or the exit ports (16) are arranged in one single row.

4. Gas-turbine combustion chamber in accordance with one of the Claims 1 to 3, **characterized in that** the supply tubes (12) and/or the exit ports (16) are arranged in multiple rows.

5. Gas-turbine combustion chamber in accordance with one of the Claims 1 to 4, **characterized in that** the supply tubes (12) and/or the exit ports (16) are provided with different exit diameters.

6. Gas-turbine combustion chamber in accordance with one of the Claims 1 to 5, **characterized in that** the supply tubes (12) and/or the exit ports (16) are provided in different arrangements.

7. Gas-turbine combustion chamber in accordance with one of the Claims 1 to 6, **characterized in that** the supply tubes (12) and/or the exit ports (16) include a device for active cooling.

8. Gas-turbine combustion chamber in accordance with one of the Claims 1 to 7, **characterized in that** the supply tubes (12) and/or the exit ports (16) feature an air flushing device for purging.

9. Gas-turbine combustion chamber in accordance with one of the Claims 1 to 8, **characterized in that** the supply tubes (12) are aerodynamically designed or profiled.

10. Gas-turbine combustion chamber in accordance with one of the Claims 1 to 8, **characterized in that** the supply tubes (12) extend radially and/or axially to the nozzle axis (14).

11. Gas-turbine combustion chamber in accordance with one of the Claims 1 to 10, **characterized in that** a piloting swirler (25) with a piloting nozzle (26) is centrically arranged to the centric fuel injector.

## Revendications

1. Chambre de combustion d'une turbine à gaz, avec un brûleur (7) et des moyens d'alimentation en carburant liquide ainsi qu'un atomiseur (6), sachant qu'un canal d'air primaire (22) du brûleur (7) de la chambre de combustion fournit une grande partie de l'air nécessaire pour le mélange et la combustion, et que les moyens d'alimentation en carburant comprennent différents tubes d'alimentation (12) faisant saillie dans la section transversale libre du canal d'air primaire de l'atomiseur (6) et/ou des orifices de sortie (16), qui, partant de l'extérieur, débouchent dans la zone du flux d'air et sont combinés à un injecteur central de carburant (15), **caractérisée en ce que** les moyens d'alimentation en carburant sont conçus pour injecter le carburant dans des zones où la vitesse du flux d'air est la plus élevée.

2. Chambre de combustion d'une turbine à gaz, avec un brûleur (7) et des moyens d'alimentation en carburant liquide ainsi qu'un atomiseur (6), sachant qu'un canal d'air primaire (22) du brûleur (7) de la chambre de combustion fournit une grande partie de l'air nécessaire pour le mélange et la combustion, et que les moyens d'alimentation en carburant comprennent différents tubes d'alimentation (12) faisant saillie dans la section transversale libre du canal d'air primaire de l'atomiseur (6) et/ou des orifices de sortie (16), qui, partant de l'extérieur, débouchent dans la zone du flux d'air et sont combinés à un injecteur central de carburant (15), **caractérisée en ce que** les moyens d'alimentation en carburant sont conçus pour injecter le carburant dans des zones où les flux massiques locaux d'air sont les plus élevés.

3. Chambre de combustion d'une turbine à gaz selon une des revendications n° 1 ou n° 2, **caractérisée en ce que** les tubes d'alimentation (12) et/ou les orifices de sortie (16) sont disposés sur une rangée.

4. Chambre de combustion d'une turbine à gaz selon une des revendications n° 1 à n° 3, **caractérisée en ce que** les tubes d'alimentation (12) et/ou les orifices de sortie (16) sont disposés sur plusieurs rangées.

5. Chambre de combustion d'une turbine à gaz selon une des revendications n° 1 à n° 4, **caractérisée en ce que** les tubes d'alimentation (12) et/ou les orifices de sortie (16) sont pourvus de diamètres de sortie différents.

6. Chambre de combustion d'une turbine à gaz selon une des revendications n° 1 à n° 5, **caractérisée en ce que** les tubes d'alimentation (12) et/ou les orifices de sortie (16) disposés en arrangements différents.

7. Chambre de combustion d'une turbine à gaz selon une des revendications n° 1 à n° 6, **caractérisée en ce que** les tubes d'alimentation (12) et/ou les orifices de sortie (16) comprennent un dispositif pour un refroidissement actif.

8. Chambre de combustion d'une turbine à gaz selon une des revendications n° 1 à n° 7, **caractérisée en ce que** les tubes d'alimentation (12) et/ou les orifices de sortie (16) présentent un dispositif de rinçage par air pour vidange.

9. Chambre de combustion d'une turbine à gaz selon une des revendications n° 1 à n° 8, **caractérisée en ce que** les tubes d'alimentation (12) ont une forme aérodynamique ou profilée.

10. Chambre de combustion d'une turbine à gaz selon une des revendications n° 1 à n° 8, **caractérisée en ce que** les tubes d'alimentation (12) s'étendent radialement et/ou axialement par rapport à l'axe de la buse (14).

11. Chambre de combustion d'une turbine à gaz selon une des revendications n° 1 à n° 10, **caractérisée en ce qu'**un corps de tourbillonnement de pilotage (25) avec une buse de pilotage (26) est disposé de manière centrée par rapport à l'injecteur centrique de carburant.
